# FASCICULE DE BREVET EUROPEEN

(11) **EP 4 124 484 B1**
(45) Date de publication et mention de la délivrance du brevet: **02.04.2025**
(21) Numéro de dépôt: 21188946.4
(22) Date de dépôt: 30.07.2021
(51) Int. Cl.: B60J 1/16, E05D 15/10

(54) **DISPOSITIF D'OBTURATION D'UNE BAIE MÉNAGÉE DANS LA CARROSSERIE D'UN VÉHICULE, ET VÉHICULE CORRESPONDANT**
VORRICHTUNG ZUM VERSCHLIESSEN EINES IN DIE KAROSSERIE EINES FAHRZEUGS EINGELASSENEN ÖFFNUNGSFELDS UND ENTSPRECHENDES FAHRZEUG
DEVICE FOR SEALING AN OPENING MADE IN THE BODY OF A VEHICLE, AND CORRESPONDING VEHICLE

(43) Date de publication de la demande: 01.02.2023
(73) Titulaire: Advanced Comfort Systems France SAS - ACS France, 79302 Bressuire (FR)
(72) Inventeur: CHARGE, Philip, 79300 Bressuire (FR); BONNIN, Arnaud, 79430 La Chapelle Saint Laurent (FR); GUILLOTEAU, Sébastien, 79350 Faye l'Abbesse (FR)
(74) Mandataire: Vidon Brevets & Stratégie

(56) Documents cités:
- EP-A2- 2 479 366
- WO-A2-2010/146185

## Description

### Domaine de l'invention

Le domaine de l'invention est celui de l'équipement des baies, utilisées notamment dans les véhicules automobiles.

Plus précisément, l'invention concerne les dispositifs d'obturation d'une baie ménagée dans un élément de structure, par exemple dans la carrosserie d'un véhicule, ou dans une portière du véhicule, et comprenant une partie mobile coulissante susceptible de libérer ou de fermer une ouverture en offrant un aspect affleurant, vu de l'extérieur.

L'invention peut notamment équiper différents types de structures, tels que les caravanes, les camping-cars, les cars et bus, les minibus, les camions, les camionnettes, les bateaux, etc.

De tels dispositifs, développés depuis plusieurs années par le titulaire de la présente demande, sont notamment connus sous le terme "baie flush".

En d'autres termes, ces dispositifs sont conçus de façon à présenter, vu de l'extérieur, un aspect affleurant ou quasi-affleurant entre la carrosserie, ou plus généralement la paroi ou la structure, et le panneau fixe du dispositif.

### Art antérieur

Le principe général de cette technique est notamment décrit dans les documents de brevet EP 2 479 366 A2, EP-0 778 168 et EP-0 857 844.

Le dispositif d'obturation (appelé par la suite "baie flush") comprend une partie fixe et une partie mobile par rapport à cette partie fixe, ou panneau coulissant.

La partie mobile est reliée à l'ensemble fixe par des éléments fonctionnels qui assurent la mobilité requise et qui sont rapportés sur la face de la partie fixe tournée vers l'intérieur du véhicule.

Ces éléments fonctionnels, ou rails, assurent une fonction de guidage et de maintien du panneau mobile. Ils sont placés sur la face orientée vers l'intérieur du véhicule, de façon suffisamment éloignée des bords, ou de la périphérie, de la partie fixe pour que cette périphérie puisse être solidarisée directement aux bords de la baie, sans que les rails n'interfèrent. On peut ainsi s'affranchir de la présence d'un cadre de liaison entre les bords de la baie et la partie fixe.

Cette partie fixe peut être réalisée en un ou plusieurs éléments (placés les uns à côté des autres dans un même plan), par exemple en verre ou en polycarbonate.

Une telle baie flush peut ainsi être montée intégralement indépendamment du véhicule, et rapportée, depuis l'extérieur, dans le logement défini à cet effet par la baie, ou le logement, définie dans la carrosserie, ou plus généralement dans la paroi.

Les bords de la partie fixe sont solidarisés, par exemple à l'aide d'un cordon de colle, aux bords de la baie, sans autre élément intermédiaire de liaison.

Sur le plan esthétique, la baie flush présente, vue de l'extérieur, un aspect lisse, affleurant, du fait qu'aucun cadre n'est nécessaire sur le contour de l'ouverture formée dans l'ensemble fixe.

Pour assurer le déplacement de la partie mobile, constituée généralement par un panneau transparent, on prévoit donc un dispositif de guidage comportant un premier et un second rails de guidage montés fixes sur la partie fixe (ou structure fixe) de la baie, de part et d'autre de l'ouverture fermée par le panneau mobile.

Le panneau mobile est monté sur les rails, pour coulisser par exemple selon une direction longitudinale, dans un plan de coulissement entre une (ou plusieurs) position d'ouverture et une position de fermeture, dans laquelle il obture l'ouverture.

Pour maximiser l'aspect affleurant, il a été proposé que, dans la position de fermeture, le panneau mobile s'inscrive dans le plan de la partie fixe, en passant d'une position intermédiaire de dégagement, dans le plan de coulissement, en regard de l'ouverture et dégagé de celle-ci à la position de fermeture.

On notera que le terme « plan » doit ici s'entendre dans une acception élargie : le plan formé par la baie est parfois courbe, selon une, voire deux, directions pour s'adapter à la forme de la structure (ceci justifie également, dans certains cas, le terme « sensiblement » utilisé dans la description et les revendications).

Le panneau mobile peut être déplacé manuellement ou bien à l'aide d'un moteur électrique. Dans ce dernier cas, des moyens d'actionnement agissent sur le panneau mobile afin de déplacer ce dernier entre une position fermée et au moins une position ouverte. Les moyens d'actionnement peuvent notamment se présenter sous la forme d'un câble (dit câble Push-Pull) relié au moteur électrique de sorte à tirer ou pousser le panneau mobile. Les moyens d'actionnement peuvent également se présenter sous la forme d'une crémaillère ou de câbles du type câble de vélo.

Pour favoriser l'ouverture et la fermeture du panneau mobile, une technique connue consiste à mettre en œuvre, dans chacun des rails de guidage, une navette guidée en translation dans le rail, comme décrit par exemple dans le document de brevet WO2010/146185. Chaque navette permet de contrôler le déplacement du panneau mobile, d'une part pour le dégager ou l'inscrire dans l'ouverture ménagée dans le panneau fixe (axe Y) et d'autre part pour le guider en coulissement (axe X). Une telle navette peut comprendre deux pistes de guidage aptes à coopérer respectivement avec deux pions fixes portés par le panneau mobile, ou inversement.

La coopération des pistes de guidage avec les pions fixe permet d'obtenir un décalage, classiquement un louvoiement, du panneau mobile de sorte à déplacer les bords latéraux du panneau mobile par rapport à la partie fixe.

Le mouvement du panneau mobile par rapport à la partie fixe peut se décomposer en deux déplacements, pour l'ouverture :
- un déplacement vers l'intérieur du véhicule (selon l'axe Y) par rapport au plan formé par la partie fixe, permettant le passage d'une position fermée et verrouillée, dans laquelle le panneau mobile se trouve dans le même plan que la partie fixe et l'ouverture, à une position intermédiaire de dégagement, dans laquelle le panneau mobile est décalé par rapport à la partie fixe en regard de l'ouverture et dégagé de celle-ci, dans un plan de coulissement, de façon à permettre ce coulissement - le panneau mobile est ainsi mobile selon une direction de dégagement perpendiculaire à la direction de coulissement ;
- un déplacement dans le plan de coulissement (selon l'axe X), parallèle au plan formé par la partie fixe.

Le passage de la position intermédiaire de dégagement à la position d'obturation se fait de façon symétrique.

Au début du mouvement d'ouverture et à la fin du mouvement de fermeture, c'est-à-dire pendant la phase de louvoiement, les déplacements des deux navettes s'effectuent suivant des directions opposées, à savoir selon des directions opposées selon l'axe X.

Afin de garantir une bonne efficacité d'ouverture/fermeture, le déplacement des navettes doit être synchronisé. Pour ce faire, des câbles de synchronisation sont mis en œuvre pour relier les navettes entre elles. Ainsi, durant la phase de louvoiement, les déplacements des extrémités de ces câbles de synchronisation s'effectuent également suivant des directions opposées, puisqu'elles sont reliées aux navettes.

Plus précisément, le déplacement d'une des navettes, par exemple la navette inférieure, est transmis à l'autre navette, par exemple la navette supérieure, par les câbles de synchronisation. Ainsi, au début du mouvement d'ouverture, la navette inférieure tire le câble de synchronisation avant (sens X) qui tire la navette supérieure dans la direction opposée (sens -X) à celle de la navette inférieure. À la fin du mouvement de fermeture, la navette inférieure tire le câble de synchronisation arrière (sens -X) qui tire la navette supérieure dans la direction opposée (sens X) à celle de la navette inférieure.

Le déplacement successif des bords du panneau mobile par rapport à la partie fixe, et donc le déplacement asymétrique des navettes, entraine de nombreux changements de direction et des efforts importants sur les câbles.

Ceci peut provoquer des frottements et des efforts axiaux et radiaux qui, avec le temps, sont néfastes et peuvent entrainer une détérioration des câbles, des navettes, du panneau mobile et/ou de la partie fixe.

Par ailleurs, la demanderesse a observé que les distances entre les points d'accroche des extrémités des câbles de synchronisation et les sorties des câbles de synchronisation sont sensiblement différentes. En effet, bien que le déplacement des extrémités des câbles de synchronisation selon l'axe Y soit commun, le déplacement selon l'axe X diffère en fonction de l'angle de rotation du câble par rapport à son point d'accroche sur la navette. Il existe donc une distorsion dans la cinématique qui peut atteindre jusqu'à 5%, ce qui peut introduire des défauts, des frottements, des blocages voire des détériorations.

Il existe donc un besoin de fournir un dispositif d'obturation d'une baie plus efficace et plus fiable, qui permette notamment un verrouillage et un déverrouillage, et plus généralement une ouverture et une fermeture, aisés, intuitifs et sans effort important.

Il existe également un besoin de fournir un dispositif d'obturation qui n'induisent pas d'effets néfastes et indésirables (tels que frottements ou détériorations) entre les câbles de synchronisation et les navettes, le panneau mobile, ou bien la partie fixe, ou à tout le moins réduisent de tels effets.

Il existe également un besoin de fournir une nouvelle technique de guidage d'un panneau mobile d'une baie d'obturation d'une structure, telle qu'un véhicule automobile ou similaire, permettant le passage d'une position d'obturation, affleurante avec le panneau fixe, à une position de coulissement, qui soit simple, efficace et fiable.

Par ailleurs, avec une telle cinématique d'ouverture/fermeture de la baie, on constate que la tension des câbles de synchronisation joue un rôle important dans le bon fonctionnement de la baie.

Une méthode simple permettant de tendre les câbles de synchronisation consiste à relier au moins une des extrémités du câble de synchronisation à un ressort (de traction, de compression, de torsion).

Un inconvénient de cette solution est que l'effort exercé par le ressort sur le câble peut s'opposer au mouvement d'ouverture ou de fermeture de la baie. Un tel ressort risque donc d'augmenter les efforts que l'utilisateur ou le moteur doivent exercer pour ouvrir/fermer la baie.

Un autre inconvénient de cette solution réside dans le fait qu'il est difficile d'assembler le câble de synchronisation tout en cherchant à obtenir une tension optimale du ressort.

En outre, un ressort dimensionné pour exercer une tension suffisante/optimale sur le câble de synchronisation peut parfois s'avérer beaucoup trop encombrant pour pouvoir se loger dans le logement alloué dans le véhicule.

La solution actuelle n'est donc pas toujours satisfaisante, et un objectif d'au moins un mode de réalisation de l'invention est d'apporter une solution à ce problème.

### Résumé de l'invention

La technique de l'invention permet de résoudre au moins certains des inconvénients soulevés par l'art antérieur. Plus précisément, l'invention se rapporte à un dispositif d'obturation d'une baie ménagée dans une structure, comprenant :
- une partie fixe, dans laquelle est définie une ouverture, et au moins un panneau mobile coulissant guidé le long de deux rails de guidage montés sur une face dudit panneau fixe, entre une position de fermeture, obturant ladite ouverture, dans un premier plan défini par ledit panneau fixe, dit plan d'obturation, et au moins une position d'ouverture, dans un second plan, dit plan de coulissement, sensiblement parallèle audit plan d'obturation,
   chacun desdits rails de guidage portant au moins une navette guidée en translation dans ledit rail, chaque navette comprenant deux pistes de guidage, respectivement deux pions fixes, aptes à coopérer respectivement avec deux pions fixes, respectivement deux pistes de guidage, porté(e)s par un cadre porté par ledit panneau mobile,
- des moyens d'actionnement agissant sur une desdites navettes pour assurer un déplacement en translation de ces dernières dans lesdits rails de guidage et le passage du panneau mobile de ladite position d'obturation à ladite au moins une position de coulissement, et réciproquement,
- deux câbles de synchronisation circulant chacun dans un des bords latéraux dudit cadre et assurant une synchronisation du déplacement desdites navettes.

Selon l'invention, chaque navette porte un curseur mobile par rapport à ladite navette et recevant une extrémité de chacun desdits câbles de synchronisation, de façon que le déplacement desdites extrémités desdits câbles de synchronisation soit sensiblement parallèle au plan dudit panneau mobile lors du déplacement desdites navettes assurant le passage dudit panneau mobile de ladite position d'obturation à ladite au moins une position de coulissement, et réciproquement.

De cette manière, lorsque le curseur est monté sur la navette, une translation du curseur par rapport à la navette, sensiblement selon l'axe Y, est autorisée lors de la phase de louvoiement du panneau mobile.

Selon un aspect particulier de la présente technique, chaque curseur est guidé en coulissement par rapport à la navette correspondante selon un axe sensiblement perpendiculaire à l'axe de déplacement desdits câbles.

Selon un autre aspect particulier de la présente technique, chaque curseur, respectivement chaque navette, comprend une fourchette coopérant avec un pion porté par la navette correspondante, respectivement le curseur correspondant.

Selon encore un autre aspect particulier de la présente technique, au moins un desdits curseurs comprend des moyens de contrôle de la tension d'au moins un desdits câbles de synchronisation.

Selon un premier mode de réalisation de la présente technique, lesdits moyens de contrôle de la tension comprennent un ressort de rappel.

Selon un aspect particulier de ce premier mode de réalisation de la présente technique, lesdits moyens de contrôle de la tension comprennent des moyens de réglage de la position du point d'accrochage d'au moins une extrémité de câble dans ledit curseur.

Selon un autre aspect particulier de ce premier mode de réalisation de la présente technique, lesdits moyens de contrôle de la tension comprennent au moins un tendeur recevant l'extrémité d'un desdits câbles de synchronisation et pénétrant dans un logement de réception formé dans ledit curseur, ledit tendeur pouvant prendre au moins deux positions distinctes dans ledit logement de réception, de façon à permettre un réglage de la tension du câble correspondant.

Selon encore un autre aspect particulier de ce premier mode de réalisation de la présente technique, ledit tendeur présente au moins un cran de blocage apte à coopérer avec ledit logement.

Selon un autre aspect particulier du premier mode de réalisation de la présente technique, ledit logement de réception présente au moins deux dents de blocage aptes à coopérer avec le ou lesdits crans de blocage dudit tendeur de sorte que le réglage de la tension dudit câble de synchronisation est fonction de la profondeur d'insertion du tendeur dans ledit logement dudit curseur.

Selon un deuxième mode de réalisation de la présente technique, lesdits moyens de contrôle de la tension comprennent des moyens de réglage de la longueur de la portion d'au moins un desdits câbles à l'intérieur dudit curseur.

Selon un aspect particulier de ce deuxième mode de réalisation de la présente technique, lesdits moyens de réglage comprennent une came imprimant, selon sa position, un décalage variable sur ledit câble.

Selon un autre aspect particulier de ce deuxième mode de réalisation de la présente technique, ladite came est solidaire d'une roue dentée coopérant avec au moins deux crans de blocage formés dans ledit curseur, et correspondant à au moins deux réglages de tension distincts.

L'invention concerne également un véhicule automobile comprenant au moins un dispositif d'obturation tel que décrit précédemment.

### Liste des Figures

La technique proposée, ainsi que les différents avantages qu'elle présente, seront plus facilement compris, à la lumière de la description qui va suivre de deux modes de réalisation illustratifs et non limitatifs de celle-ci, et des dessins annexés parmi lesquels :
[Fig 1] illustre un exemple d'un dispositif d'obturation, ou baie flush, selon l'art antérieur ;
[Fig 2] illustre une vue partielle du dispositif d'obturation de la figure 1 ;
[Fig 3] illustre une vue partielle d'un dispositif d'obturation, ou baie flush, selon la technique proposée ;
[Fig 4] illustre une vue éclatée des moyens de solidarisation des câbles de synchronisation sur les navettes selon la technique proposée, avant assemblage ;
[Fig 5] illustre une vue de dessus des moyens de solidarisation de la figure 4, après assemblage ;
[Fig 6] illustre une vue éclatée, de dessus, des moyens de tension du dispositif d'obturation de la figure 3, montrant un exemple de curseur et de tendeurs selon le premier mode de réalisation de la technique proposée ;
[Fig 7] illustre une vue en perspective des moyens de tension de la figure 6, après assemblage ;
[Fig 8] illustre une autre vue éclatée, de dessous, du curseur et des tendeurs de la figure 6 ;
[Fig 9] illustre une vue de dessus des moyens de tension de la figure 6, montrant la façon d'assembler les tendeurs avec le curseur selon le premier mode de réalisation ;
[Fig 10] illustre une vue de dessus du curseur et des tendeurs de la figure 9, après assemblage ;
[Fig 11] illustre une vue éclatée, du dessous, des moyens de tension du dispositif d'obturation de la figure 6, montrant un exemple de curseur et de tendeurs selon le deuxième mode de réalisation de la technique proposée ;
[Fig 12] illustre une vue en perspective, du dessous, du curseur et des tendeurs de la figure 11, après assemblage ;
[Fig 13] montre une vue en perspective, une vue de dessus, et une vue de côté du tendeur des moyens de tension selon le deuxième mode de réalisation ;
[Fig 14] illustre une vue de dessus du curseur et des tendeurs de la figure 11, après assemblage ;
[Fig 15] illustre une vue de dessus en coupe du curseur et d'un tendeur selon le deuxième mode de réalisation, montrant la façon dont est tendu un câble de synchronisation ;
[Fig 16] illustre une autre vue de dessus en coupe du curseur et d'un tendeur selon le deuxième mode de réalisation, montrant la façon dont est tendu un câble de synchronisation ;
[Fig 17] illustre encore une autre vue de dessus en coupe du curseur et d'un tendeur selon le deuxième mode de réalisation, montrant la façon dont est tendu un câble de synchronisation ;
[Fig 18] illustre une vue partielle et de côté du curseur et d'un tendeur selon le deuxième mode de réalisation ;
[Fig 19] illustre une vue en coupe du curseur et d'un tendeur de la figure 16, en position de montage, selon le plan B-B illustré sur la figure 18 ;
[Fig 20] illustre une vue en coupe du curseur et d'un tendeur de la figure 15, en position de montage, selon le plan C-C illustré sur la figure 19 ;
[Fig 21] illustre une vue en coupe du curseur et d'un tendeur de la figure 16, en position de tension, selon le plan B-B illustré sur la figure 18 ;
[Fig 22] illustre une vue en coupe du curseur et d'un tendeur de la figure 16, en position de tension, selon le plan D-D illustré sur la figure 21.

### Description détaillée de l'invention

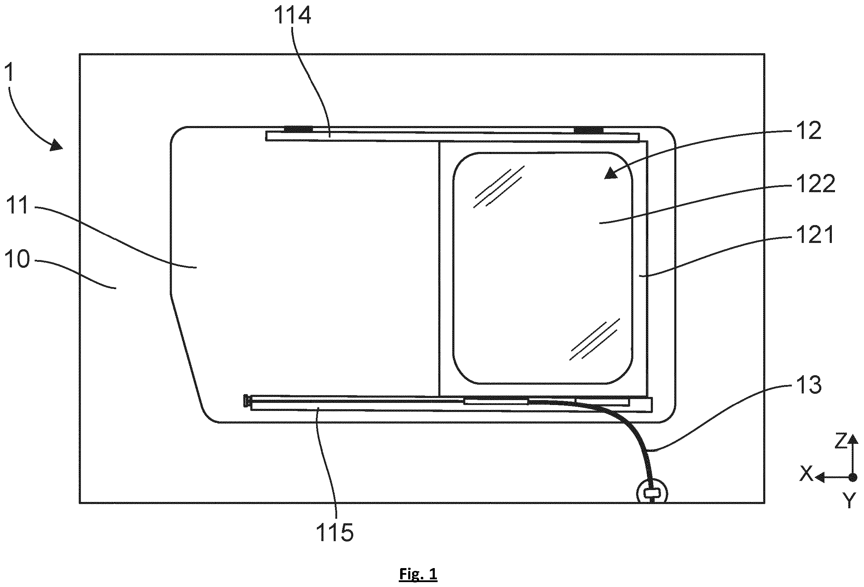

On illustre par la suite différents modes de réalisation de la technique proposée, traités à titre de simples exemples illustratifs, et non limitatifs, à l'appui des figures 1 à 22.

### Fonctionnement général de la baie

La **figure 1** illustre une baie flush à panneau mobile en coulissement vue de l'intérieur du véhicule.

Une telle baie flush 1 se présente sous la forme d'un ensemble, ou dispositif d'obturation, prêt à être placé dans une baie (c'est-à-dire une ouverture, ou un "trou") ménagée dans la carrosserie 10 (paroi latérale par exemple) ou une porte, ou plus généralement dans la structure d'un véhicule (ou d'une caravane ou d'un camping-car, par exemple), ou plus généralement d'une paroi devant recevoir un dispositif d'obturation muni d'un ouvrant.

Un tel dispositif d'obturation comprend une partie fixe 11, c'est-à-dire restant immobile par rapport à la structure 10 qui la reçoit, et un panneau mobile en coulissement, ou panneau coulissant, 12, mobile par rapport à la partie fixe 11.

La partie fixe 11, encore appelée panneau fixe, peut notamment être réalisée en verre ou en polycarbonate, en un ou plusieurs éléments.

La partie fixe 11 est percée d'une ouverture obturée par le panneau mobile 12 dans la position de la figure 1 et s'étendant dans un même plan que la partie fixe 11.

Ce panneau mobile 12 comporte notamment une portion vitrée 122 et un cadre 121.

Des rails de guidage, respectivement un rail supérieur 114 et un rail inférieur 115, sont rapportés par collage sur la face de la partie fixe 11 orientée vers l'intérieur du véhicule.

On note que ces rails sont éloignés du contour de la partie fixe 11, et ne participent pas, ni ne nuisent, à la solidarisation de celle-ci au bord de la baie.

Les rails 114 et 115, qui sont sensiblement parallèles dans cet exemple, maintiennent et guident en coulissement le panneau mobile 12, qui présente un cadre 121 solidaire des rails 114, 115.

Le panneau mobile 12 peut être déplacé le long des rails 114, 115, dans un plan de coulissement sensiblement parallèle au plan défini par la partie fixe 11.

Le panneau mobile 12 peut venir obturer complètement l'ouverture de la partie fixe 11 (figure 1) ou libérer partiellement ou totalement cette ouverture.

Ainsi, le panneau mobile 12 peut prendre une ou plusieurs positions d'ouverture, selon sa position par rapport aux rails 114, 115.

Par ailleurs, le panneau mobile 12 peut se déplacer perpendiculairement au plan défini par la partie fixe 11, de façon à venir obturer l'ouverture, dans une position fermée (figure 1), dans laquelle elle affleure avec cette partie fixe 11, de façon à proposer un ensemble affleurant (carrosserie 10, partie fixe 11 et partie mobile 12).

La face de la partie fixe 11 tournée vers l'intérieur du véhicule porte par ailleurs un joint d'étanchéité (non représenté) collé sur le contour de l'ouverture, dont l'extrémité de la lèvre vient prendre appui sur le panneau mobile 12, lorsque celui-ci est en position d'obturation.

Dans une variante, le joint d'étanchéité peut être monté sur le cadre 121 du panneau mobile 12, pour venir en contact avec la partie fixe 11.

Le rail supérieur 114 porte une navette supérieure 2 et le rail inférieur 115 porte une navette inférieure 3, chacune des navettes portant deux gorges (non illustrées), ou pistes, situées au voisinage respectivement de chaque bord latéral du panneau mobile 12 et coopérant avec un pion avant et arrière (non illustrés) solidaire d'un bord du panneau mobile 12.

Chaque navette 2, 3 est ainsi guidée en coulissement dans un rail 114, 115, selon un axe parallèle à l'axe X, c'est-à-dire l'axe correspondant à la longueur du véhicule.

Plus précisément, les rails supérieur 114 et inférieur 115 sont des rails classiques qui comprennent une paroi de fond et deux parois latérales s'étendant perpendiculairement à la paroi de fond. L'autre extrémité des parois latérales présente un court retour permettant de recevoir et maintenir les navettes supérieure 2 et inférieure 3.

Les rails sont donc aptes à recevoir les navettes de sorte à ce que ces dernières puissent coulisser longitudinalement dans les rails selon l'axe X. Ainsi, les rails sont simples et peu coûteux à fabriquer, puisqu'ils assurent un guidage selon un seul axe, les navettes se chargeant du déplacement selon l'axe Y.

Les navettes supérieure 2 et inférieure 3 se présentent chacune sensiblement sous la forme d'un barreau de dimensions adaptées pour coulisser dans les rails de guidage 114, 115 et présentent des pistes avant et arrière aptes à coopérer avec des pions portés par le panneau mobile 12.

Plus précisément, les navettes 2, 3 comprennent, une piste, dite piste avant, qui contrôle le déplacement de la partie distale du panneau mobile 12 (la partie du panneau la plus proche de l'avant du véhicule) et une piste, dite piste arrière, qui contrôle le déplacement de la partie proximale de ce même panneau mobile 12, opposée à la partie distale.

Par exemple, les pistes des navettes supérieure 2 et inférieure 3 présentent des formes sensiblement identiques. De nombreuses variantes de forme de pistes peuvent être envisagées en fonction du guidage souhaité du cadre 121 du panneau mobile 12 par rapport aux navettes 2, 3. Des formes différentes permettent notamment de choisir quel bord du panneau mobile 12 doit être louvoyé en premier lors de l'ouverture du panneau mobile 12.

Ces pistes permettent, lors du déplacement des navettes, d'entrainer le panneau mobile et de permettre son déplacement, selon les axes X et Y, entre la position fermée et la ou les positions d'ouverture.

Plus précisément, le mouvement du panneau mobile 12 par rapport à la partie fixe 11 peut se décomposer en deux déplacements indépendants :
- un déplacement perpendiculaire (selon l'axe Y) vers l'intérieur du véhicule en deux temps (dit louvoiement) par rapport au plan formé par la partie fixe 11, permettant le passage d'une position fermée et verrouillée, dans laquelle le panneau mobile 12 se trouve dans le même plan que la partie fixe 11 et l'ouverture, à une position intermédiaire de dégagement, dans laquelle le panneau mobile 12 est décalé par rapport à la partie fixe 11 en regard de l'ouverture et dégagé de celle-ci, dans un plan de coulissement, de façon à permettre ce coulissement - le panneau mobile 12 est ainsi mobile selon une direction de dégagement perpendiculaire à la direction de coulissement;
- un déplacement dans le plan de coulissement (selon l'axe X), parallèle au plan formé par la partie fixe 11.

Le passage de la position intermédiaire de dégagement à la position d'obturation se fait de façon symétrique.

Il est à noter que les déplacements des deux navettes s'effectuent suivant des directions opposées au début du mouvement d'ouverture et à la fin du mouvement de fermeture, c'est-à-dire pendant la phase de louvoiement. Pendant le reste du déplacement, les navettes se déplacent dans la même direction.

Les différents mouvements du panneau mobile 12 sont contrôlés à partir de moyens de mise en mouvement des navettes 2, 3 à l'intérieur des rails de guidage 114, 115.

Le mouvement de la navette inférieure 3 le long du rail de guidage inférieure 115 est assuré par le biais d'un câble de commande, ou câble d'entrainement, 13 de type "push pull", lui-même entrainé par des moyens motorisés commandés par un utilisateur.

Plus précisément, le câble d'entrainement 13 est destiné soit à pousser sur la navette inférieure 3 (dans la direction de l'axe X, c'est-à-dire vers l'arrière du véhicule) pour déplacer le panneau mobile 12 de sa position fermée vers l'une des positions ouvertes, soit pour tirer la navette inférieure 3 (dans une direction inverse à l'axe X, c'est-à-dire vers l'avant du véhicule) pour déplacer le panneau mobile 12 d'une position ouverte vers sa position fermée.

Le câble d'entrainement 13 est, dans cet exemple, poussé ou tiré par un moteur (non illustré).

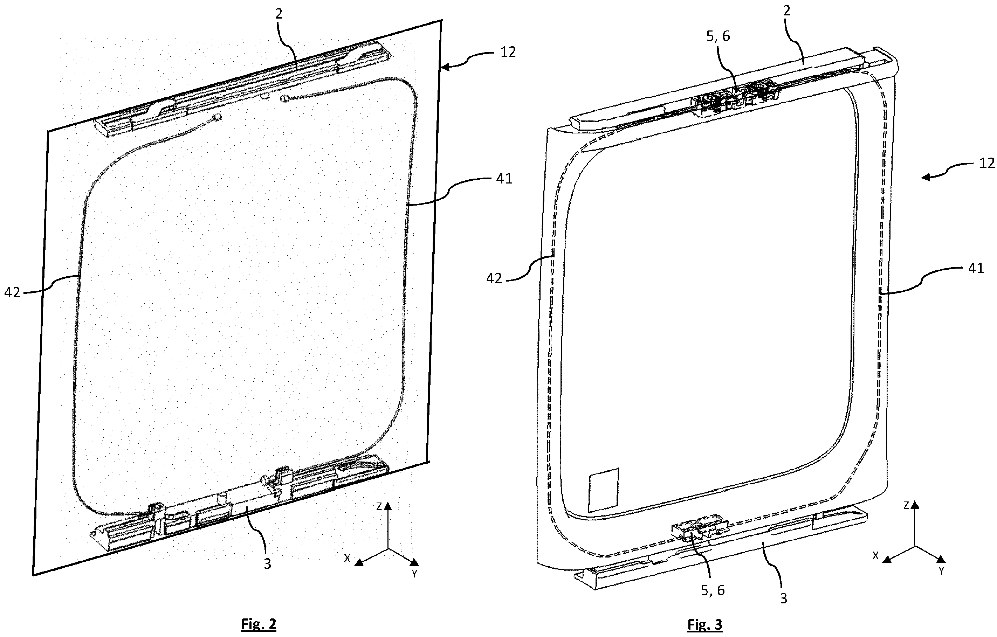

Le mouvement de la navette supérieure 2 le long du rail de guidage supérieur 114 est synchronisé au mouvement de la navette inférieure 3 par le biais de moyens de synchronisation se présentant, dans cet exemple, sous la forme de deux câbles de synchronisation (visibles sur la figure 2, notamment). En d'autres termes, le déplacement de la navette inférieure est transmis à la navette supérieure par les câbles de synchronisation.

Les **figures 2** et **3****,** illustrent une vue partielle du panneau mobile 12 du dispositif d'obturation 1 montrant le cheminement des câbles de synchronisation 41, 42 de la navette inférieure 3 jusqu'à la navette supérieure 2 à travers le cadre du panneau mobile 12.

Les câbles de synchronisation 41, 42 relient donc les navettes supérieure 2 et inférieure 3 entre elles de sorte à assurer un déplacement optimal des navettes, et donc du panneau mobile 12, lorsque le câble d'entrainement 13 est actionné.

Sur la figure 2, illustrant l'art antérieur, les câbles de synchronisation 41, 42 mentionnés précédemment sont connectés directement sur les navettes 2, 3, ou via un ressort de tension, par exemple.

La figure 3 illustre partiellement le dispositif d'obturation selon la technique proposée dans lequel les navettes supérieure 2 et inférieure 3 portent des moyens de solidarisation 5 et de tension 6 des câbles de synchronisation 41, 42 mentionnés précédemment, qui seront décrits plus en détails dans la suite de cette description, en relation avec les premier et deuxième modes de réalisation de la technique proposée.

### Description d'un exemple de moyens de solidarisation des câbles de synchronisation sur les navettes

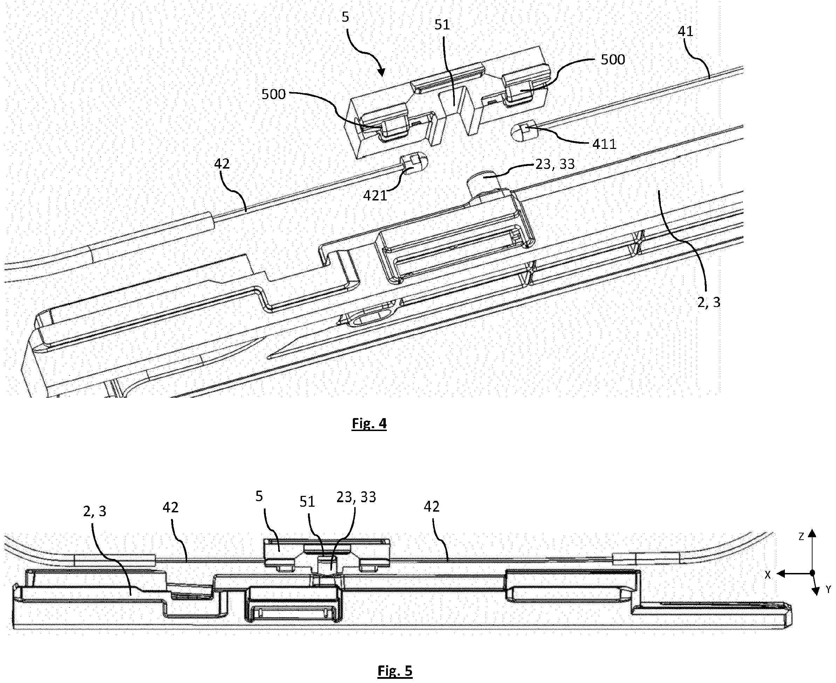

Les **figures 4 et 5** illustrent les moyens de solidarisation 5 des câbles de synchronisation 41, 42 sur les navettes 2, 3 selon un mode de réalisation de la technique proposée.

Ces moyens de solidarisation 5 se présentent sous la forme d'un curseur 5 monté sur chacune des navettes 2, 3. Le curseur 5 permet donc de relier une extrémité des câbles avant 41 et arrière 42 sur la navette 2, 3.

Plus particulièrement, le curseur 5 présente une fourchette, ou rainure, 51 située sensiblement au milieu du curseur 5. La fourchette 51 est apte à coopérer avec un pion, ou doigt, de solidarisation 23, 33 porté par les navettes 2, 3.

La fourchette 51 autorise, lorsque le curseur 5 est monté sur la navette 2, 3, une translation du curseur 5 par rapport à la navette 2, 3, sensiblement selon l'axe Y.

De préférence, le curseur 5 est coulissé/déplacé transversalement par rapport aux navettes 2, 3. En d'autres termes, le curseur 5 se déplace selon un axe perpendiculaire (l'axe Y) à l'axe de déplacement des navettes 2, 3 (l'axe X). En d'autres termes, le curseur 5 ne se déplace pas transversalement (selon l'axe Y) par rapport au cadre 121 du panneau mobile 12, puisque le déplacement selon l'axe Y de la navette 2, 3 est effectué au sein de la fourchette 51. Le curseur 5 ne se déplace donc que selon l'axe X.

Dans une variante (non illustrée), il est envisageable de placer le pion de solidarisation 23, 33 sur le curseur 5 et la fourchette 51 sur la navette 2, 3.

Ainsi, la présente technique permet de limiter, voire de supprimer, les frottements des câbles de synchronisation avec les navettes et le cadre du panneau mobile de sorte à minimiser les bruits de fonctionnement lors de l'ouverture et la fermeture du panneau mobile 12.

La présente technique permet en outre de diminuer, voire supprimer, les distorsions de la cinématique d'ouverture/fermeture liées au louvoiement du panneau mobile 12 par rapport à la partie fixe 11 du dispositif d'obturation1.

Le curseur 5 présente, dans cet exemple, de chaque côté de la fourchette 51, un logement 500 de réception de la tête 411, 421 des câbles de synchronisation avant 41 et arrière 42. Dans cet exemple, la tension des câbles de synchronisation 41, 42 n'est donc pas être contrôlée finement lors du montage.

On décrit ci-après deux variantes de l'invention, mettant en œuvre en outre des moyens de contrôle de la tension.

### Description d'un premier mode de réalisation des moyens de contrôle de la tension des câbles de synchronisation

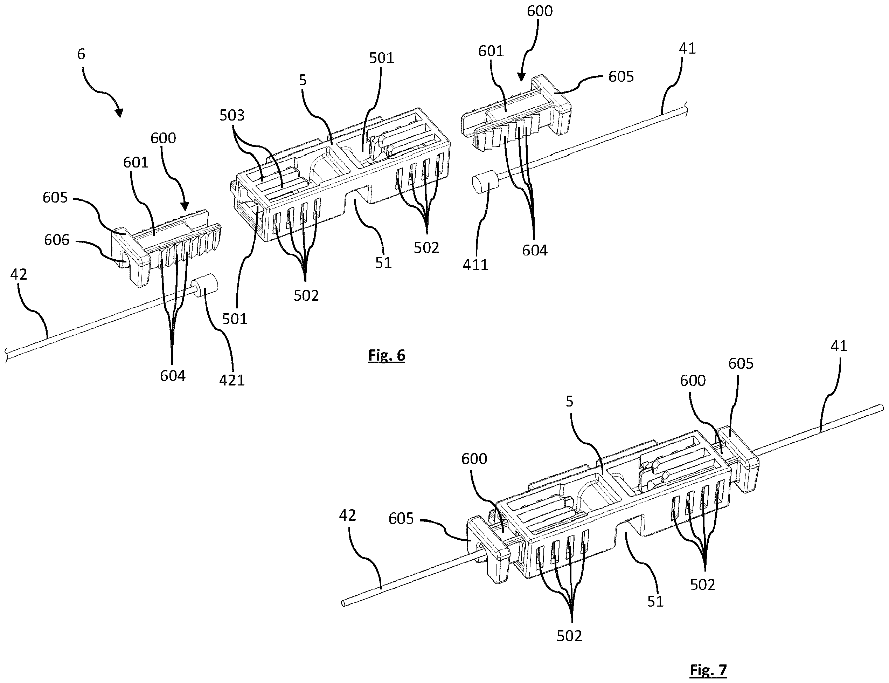

Les **figures 6 à 10** illustrent les moyens de contrôle 6 de la tension des câbles de synchronisation du dispositif d'obturation 1 selon un premier mode de réalisation.

Comme décrit précédemment, les moyens de solidarisation 5 se présentent ici sous la forme d'un curseur 5 monté sur les navettes 2, 3. Plus particulièrement, le curseur 5 présente une fourchette, ou rainure, 51 située sensiblement au milieu du curseur 5. La fourchette 51 est apte à coopérer avec un pion, ou doigt, de solidarisation 23, 33 porté par les navettes 2, 3. La fourchette 51 autorise, lorsque le curseur 5 est monté sur la navette 2, 3, une translation du curseur 5 par rapport à la navette 2, 3, selon l'axe Y.

Ainsi, le curseur 5 limite les frottements des câbles de synchronisation avec les navettes et le cadre du panneau mobile de sorte à minimiser les bruits de fonctionnement lors de l'ouverture et la fermeture du panneau mobile 12.

Le curseur 5 permet en outre de diminuer, voire supprimer, les distorsions de la cinématique d'ouverture/fermeture liées au louvoiement du panneau mobile 12 par rapport à la partie fixe 11 du dispositif d'obturation1.

Le curseur 5 présente, de chaque côté de la fourchette 51, des moyens de contrôle de la tension 6 des câbles de synchronisation 41, 42.

Dans ce mode de réalisation les moyens de contrôle de la tension 6 des câbles de synchronisation 41, 42 se présente sous la forme de moyens de réglage de la position du point d'accrochage d'une extrémité du câble de synchronisation dans le curseur 5.

Le curseur 5 présente un logement 501 de réception des moyens de réglage de la position du point d'accrochage à l'intérieur du curseur 5. Les moyens de réglage de la position du point d'accrochage à l'intérieur du curseur 5 se présentent ici sous la forme d'un tendeur 600.

Ainsi, le curseur 5 présente un logement 501 de réception du tendeur 600. Le curseur 5 est sensiblement identique de chaque côté de la fourchette 51. Dans cet exemple, le curseur 5 comprend donc deux logements de réception 501 de sorte à recevoir deux tendeurs 600. Chaque tendeur 600 permet d'agir sur une extrémité d'un câble de synchronisation 41, 42.

Le logement de réception 501 présente, sur au moins deux faces latérales internes opposées, une série/pluralité de dents, ou saillies, de blocage 502.

Dans cet exemple, chacune de ces faces latérales présente quatre dents de blocage 502 qui s'étendent vers l'intérieur du logement 501. En d'autres termes, ces dents de blocage 502 font saillies sensiblement perpendiculairement à l'axe longitudinal du curseur 5.

Des lames souples 503 assurent le guidage et le centrage du tendeur 600 dans la direction d'introduction au sein du logement de réception 501 du curseur 5.

Le curseur 5 est apte à coopérer les tendeurs 600. Plus précisément, les tendeurs 600 permettent de régler la tension des câbles de synchronisation, quelle que soit leur longueur, de sorte à éviter un décalage entre les mouvements des deux navettes 2,3. Les tendeurs 600 permettent d'équilibrer la tension entre les deux câbles de synchronisation 41, 42 afin d'optimiser le déplacement synchronisé des navettes 2,3.

Chaque extrémité des câbles de synchronisation 41, 42 est solidaire d'un tendeur 600 qui, en coopération avec le curseur 5, permet de régler/ajuster la tension des câbles de synchronisation 41, 42.

Le tendeur 600, qui est de préférence monobloc, se présente sous la forme d'une pièce sensiblement en forme de T dans laquelle la barre verticale 601 du T présente un canal interne 602a de passage d'un câble de synchronisation 41, 42. L'extrémité libre de la barre verticale 601 du T présente un logement 602b de maintien de la tête 411, 421 du câble de synchronisation 41, 42.

Dans cet exemple, la tête 411, 421 du câble de synchronisation 41, 42 est clippée ou encliquetée dans logement 602b de maintien (visible sur les figures 5 et 6 notamment). D'autres solutions de solidarisation de la tête 411, 421 du câble de synchronisation 41, 42 sont envisageables.

La barre transversale 605 du T du tendeur 600 constitue une butée permettant de stopper/limiter l'insertion/introduction du tendeur 600 dans le curseur 5. Cette butée 605 comprend une encoche 606 de passage du câble de synchronisation 41, 42 s'étendant dans le prolongement du canal 602a.

Ainsi, pour solidariser l'extrémité d'un câble de synchronisation 41, 42 au tendeur 600, il suffit d'insérer la tête 411, 421 du câble de synchronisation 41, 42 dans le logement de maintien 602b et de placer/guider le câble de synchronisation 41, 42 à travers/dans le canal 602a et l'encoche 606 du tendeur.

Le câble de synchronisation est alors maintenu fermement au tendeur 600. Un tel tendeur 600 permet un assemblage simple et fiable du câble de synchronisation 41, 42.

Le tendeur 600 présente, en outre, sur deux faces latérales opposées de la barre verticale du T, une série/pluralité de crans, ou creux, de blocage 604 configurés pour coopérer avec les dents de blocage 502 ménagées dans le logement de réception 501 du curseur 5. Le tendeur 600 peut donc prendre au moins deux positions distinctes dans le logement de réception 501, de façon à permettre un réglage de la tension du câble de synchronisation 41, 42.

La coopération des dents de blocage 502 du curseur 5 avec les crans de blocage 604 du tendeur 600 permettent de verrouiller la position du tendeur 600 dans le logement de réception 501. Le retrait du tendeur 600 est donc empêché par la coopération des dents 502 et des creux 604 de blocages. Ceci empêche donc que les câbles de synchronisation 41, 42 ne se détendent.

Dans cet exemple, chacune desdites faces du tendeur 600 comprend huit crans de blocage 604 correspondant chacun à une position distincte du tendeur 600 dans le logement 501, ces positions du tendeur 600 correspondant chacune à une position de réglage de la tension du câble de synchronisation 41, 42. Un nombre différent de crans peut évidemment être envisagé.

Après solidarisation de l'extrémité du câble de synchronisation 41, 42 avec le tendeur 600, le tendeur 600 peut être inséré dans le curseur 5, comme illustré sur les figures 6 et 7.

La tension du câble de synchronisation est donc fonction de la profondeur d'insertion du tendeur 600 dans le logement 501 du curseur 5. Le réglage de la tension du câble de synchronisation 41, 42 est donc très simple à effectuer. De plus, les différents crans de blocage 604 permettent d'obtenir un réglage relativement fin de la tension du câble de synchronisation 41, 42.

Ainsi, le curseur 5, monté sur une des navettes 2, 3 permet de fixer une extrémité de chaque câble de synchronisation 41, 42 à la navette. Les curseurs 5 et les tendeurs 600 permettent, après fixation sur les navettes 2, 3, de relier simplement et efficacement les navettes entre elles par les deux câbles de synchronisation 41, 42 et ainsi assurer un déplacement optimal de ces dernières lors de l'ouverture/fermeture du panneau mobile 12.

De cette manière, les détériorations (usure, bruit...), des navettes, des câbles de synchronisation et du cadre 121 du panneau mobile 12 sont évitées.

### Description d'un deuxième mode de réalisation des moyens de contrôle de la tension des câbles de synchronisation

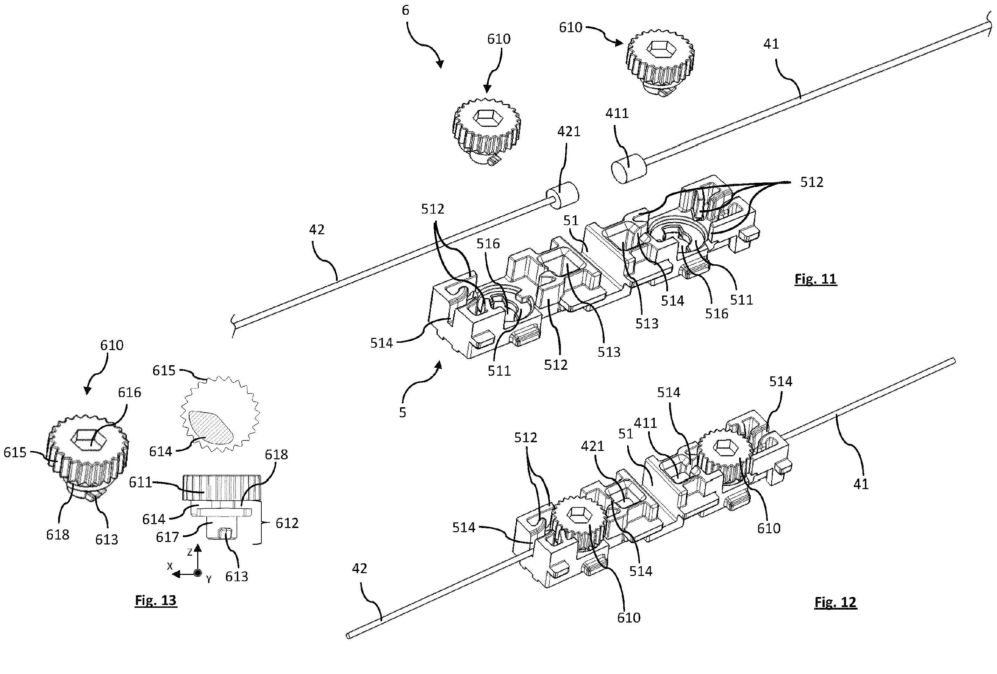

Le deuxième mode de réalisation de la technique proposée se réfère aux figures 11 à 22.

Les **figures 11, 12** **et** **14****,** notamment, illustrent les moyens de contrôle 6 de la tension des câbles de synchronisation du dispositif d'obturation 1 selon un deuxième mode de réalisation.

Comme décrit précédemment, les moyens de solidarisation 5 se présentent ici sous la forme d'un curseur 5 monté sur les navettes 2, 3. Plus particulièrement, le curseur 5 présente une fourchette, ou rainure, 51 située sensiblement au milieu du curseur 5. La fourchette 51 est apte à coopérer avec un pion, ou doigt, de solidarisation 23, 33 porté par les navettes 2, 3. La fourchette 51 autorise, lorsque le curseur 5 est monté sur la navette 2, 3, une translation du curseur 5 par rapport à la navette 2, 3, selon l'axe Y.

Ainsi, le curseur 5 limite les frottements des câbles de synchronisation avec les navettes et le cadre du panneau mobile de sorte à minimiser les bruits de fonctionnement lors de l'ouverture et la fermeture du panneau mobile 12.

Le curseur 5 permet en outre de diminuer, voire supprimer, les distorsions de la cinématique d'ouverture/fermeture liées au louvoiement du panneau mobile 12 par rapport à la partie fixe 11 du dispositif d'obturation1.

Le curseur 5 présente, de chaque côté de la fourchette 51, des moyens de contrôle de la tension 6 des câbles de synchronisation 41, 42.

Dans ce mode de réalisation les moyens de contrôle de la tension 6 des câbles de synchronisation 41, 42 se présente sous la forme de moyens de réglage de la longueur de la portion du câble de synchronisation à l'intérieur du curseur 5.

Le curseur 5 présente un logement 511 de réception des moyens de réglage de la longueur de la portion du câble de synchronisation à l'intérieur du curseur 5. Les moyens de réglage de la longueur de la portion du câble de synchronisation à l'intérieur du curseur 5 se présentent ici sous la forme d'un tendeur 610.

Le curseur 5 présente, de chaque côté de la fourchette 51, un logement 511 de réception d'un tendeur 610. Le curseur 5 est sensiblement symétrique de chaque côté de la fourchette 51 (symétrie selon l'axe longitudinal de la fourchette).

Le logement de réception 511 est sensiblement cylindrique et permet de recevoir, par la face inférieure du curseur 5, le tendeur 610. Le logement de réception 511 présente, sur ces bords, une série/pluralité de crans, ou saillies, de blocage 512.

Dans cet exemple, trois crans de blocage 512 sont distribuées sur le bord/pourtour de chaque logement de réception 511. Ces crans de blocage 512 s'étendent vers l'intérieur du logement 511. En d'autres termes, ces crans de blocage 512 font saillies sensiblement perpendiculairement à l'axe longitudinal du logement de réception 511.

En outre, dans ce mode de réalisation, le curseur 5 présente, entre la fourchette 51 et les logements de réception 511 des tendeurs 610, un logement de maintien 513 de la tête 411, 421 d'un câble de synchronisation 41, 42.

Dans cet exemple, la tête 411, 421 du câble de synchronisation 41, 42 est clippée ou encliquetée dans un logement de maintien 513 (visible sur la figure 11 notamment). D'autres solutions de solidarisation de la tête 411, 421 du câble de synchronisation 41, 42 sont envisageables.

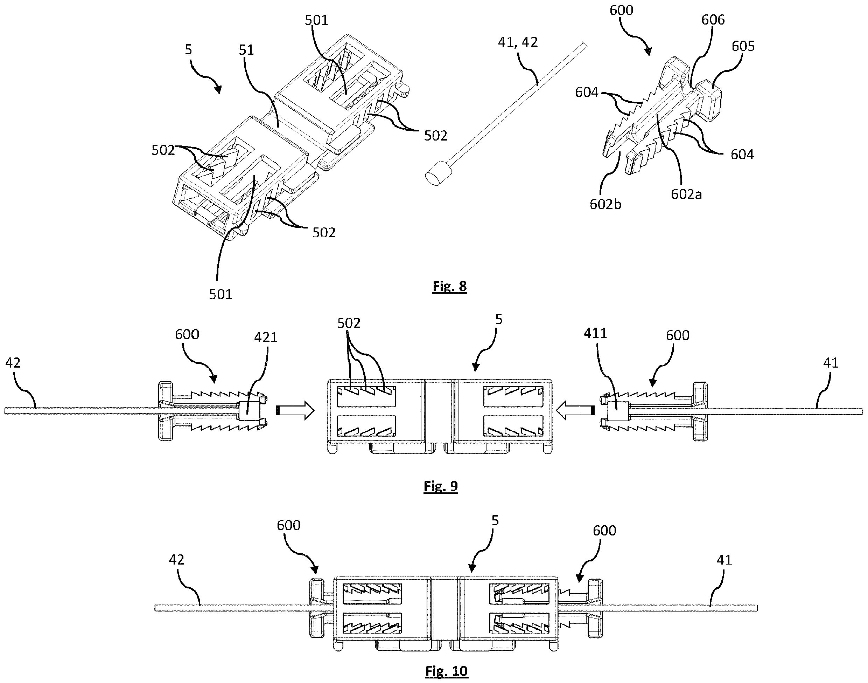

Le curseur 5 présente également des encoches 514 de passage du câble de synchronisation 41, 42 (visibles sur les figures 8 et 9). Ces encoches 514 sont situées de part et d'autre du logement de réception 511. Plus précisément, une première encoche 514 est située entre le logement de réception 511 du tendeur 610 et le bord d'extrémité du curseur 5, tandis qu'une deuxième encoche 514 se situe entre le logement de réception 111 du tendeur 610 et le logement 513 de réception de la tête 411, 421 du câble de synchronisation.

Le curseur 5 présente une ouverture 516 ménagée au fond du logement de réception 511. Cette ouverture 516 présente une portion centrale circulaire ainsi que deux portions rectilignes situées en vis-à-vis, comme visible sur les figures 8, 16 et 17.

Le curseur 5 est apte à coopérer avec les moyens de tension 6 qui se présentent, dans cet exemple, sous la forme d'un tendeur 610. Dans cet exemple, le curseur 5 comprend deux logements de réception 511 de sorte à recevoir deux tendeurs 610. Chaque tendeur 610 permet d'agir sur un câble de synchronisation 41, 42.

Les tendeurs 610 permettent de régler la tension des câbles de synchronisation, quelle que soit leur longueur, de sorte à éviter un décalage entre les mouvements des deux navettes 2,3. Les tendeurs 610 permettent d'équilibrer la tension entre les deux câbles de synchronisation 41, 42 afin d'optimiser le déplacement synchronisé des navettes 2,3.

Chaque câble de synchronisation 41, 42 coopère avec un tendeur 610 qui permet de faire varier le cheminement de ces derniers afin de régler/ajuster la tension des câbles de synchronisation 41, 42.

Plus précisément, le tendeur 610 permet de régler la longueur de la portion du câble de synchronisation 41, 42 reçue à l'intérieur du curseur 5.

Le tendeur 610, qui est de préférence monobloc, se présente sous la forme d'une molette cylindrique illustrée sous différents angles sur la **figure 10****.**

Le tendeur 610 présente une première portion, ou roue dentée, 611, située sur la partie supérieure du tendeur. Cette roue dentée, de forme cylindrique comprend, sur sa périphérie, une pluralité de dents de blocage 615 faisant saillies perpendiculairement à l'axe longitudinal de la molette 610.

Une empreinte 616 située sur la face supérieure du tendeur 610 est apte à recevoir un outil (du type clé Allen dans cet exemple) permettant de faire pivoter le tendeur 610 de sorte à régler la tension des câbles de synchronisation 41, 42, comme détaillé par la suite.

Le tendeur 610 présente, sous la roue dentée 611 (selon l'axe Z), une came 612 présentant une rainure 618 de passage/réception du câble de synchronisation. Ainsi, lorsque le tendeur 610 est reçu dans le logement 511 du curseur 5, le câble de synchronisation 41, 42 passe dans la première encoche 514, dans la rainure 618 du tendeur 610 puis dans la deuxième encoche 514 jusqu'au logement de maintien 513 de la tête 411, 412.

La came 612 présente une protubérance 614 qui permet de dévier le cheminement du câble de synchronisation 41, 42. Plus précisément, cette protubérance 614 permet d'allonger le parcours/trajet du câble de synchronisation de sorte à augmenter la tension de ce dernier, comme détaillé plus en détail en relation avec les figures 12 à 14. En d'autres termes, la protubérance 614 permet de régler la longueur de la portion du câble de synchronisation 41, 42 reçue à l'intérieur du curseur 5.

La came 612 présente, sous la rainure 618, une portion cylindrique 617 destinée à coopérer avec la portion circulaire correspondante de l'ouverture 516 ménagée dans le logement de réception 511 du tendeur 610.

La deuxième portion 617 présente un doigt de verrouillage 613 destiné à coopérer avec l'ouverture 516 du curseur 5 afin de verrouiller le tendeur 610 dans le logement de réception 513 ménagé dans le curseur 5.

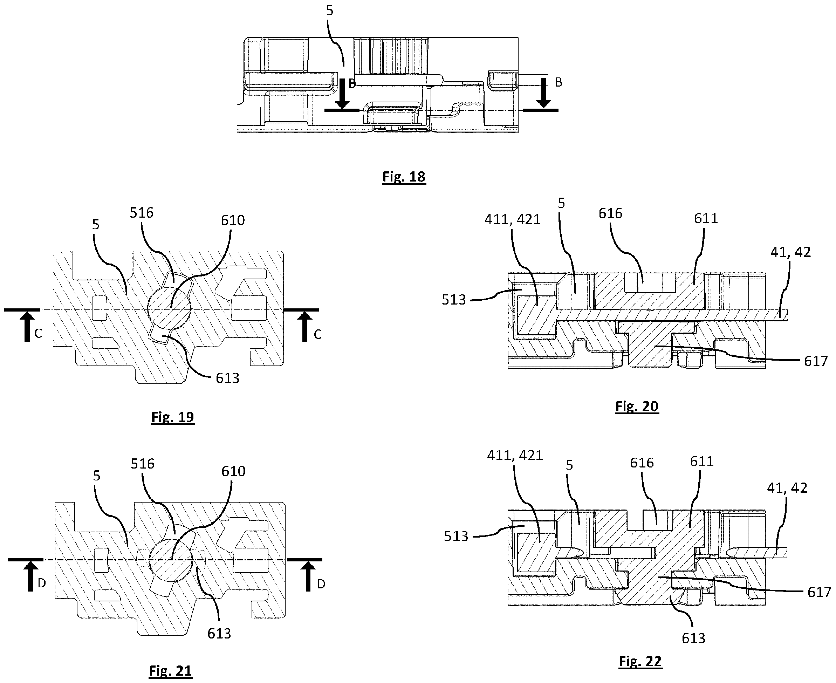

Comme illustré sur les figures 18 à 22, le doigt de verrouillage 613 traverse l'ouverture 516 du curseur 5. Le verrouillage du tendeur 610 avec le curseur 5 est obtenu par une rotation, du type quart de tour, qui est effectuée lors de la mise sous tension du câble de synchronisation 41, 42, c'est-à-dire lors de la rotation du tendeur 610.

Dans cet exemple, le verrouillage du tendeur 610 avec le curseur 5 est donc obtenu par la mise en œuvre d'un doigt de verrouillage et d'une rotation du type quart de tour. D'autres solutions de verrouillage du tendeur 610 avec le curseur 5 sont envisageables. Par exemple, ce verrouillage peut être obtenu par un élément de blocage de type clip ou vis.

Dans une variante, le tendeur 610 est monté libre en translation suivant l'axe Z dans le logement 511. Dans ce cas, c'est le câble de synchronisation 41, 42 qui, lorsqu'il est tendu, empêche le tendeur 610 de sortir du logement 511 du curseur 5.

Dans ce deuxième mode de réalisation, l'installation du câble de synchronisation s'effectue en introduisant la tête 411, 421 du câble dans le logement de maintien 513 du curseur puis en guidant le câble de synchronisation dans les encoches 514 du curseur 5 et dans la rainure 618 du tendeur 610 puis en logeant le tendeur 610 dans son logement de réception 511.

Le câble de synchronisation 41, 42 est alors maintenu fermement au curseur 5 et il coopère également avec le tendeur 610. Une telle mise en œuvre permet un assemblage simple et fiable du câble de synchronisation 41, 42 sur la navette 2, 3.

Après assemblage du câble de synchronisation 41, 42 avec le tendeur 610 et le curseur 5, la tension du câble de synchronisation 41, 42 peut alors être réglée, comme illustré sur les figures 12 à 14.

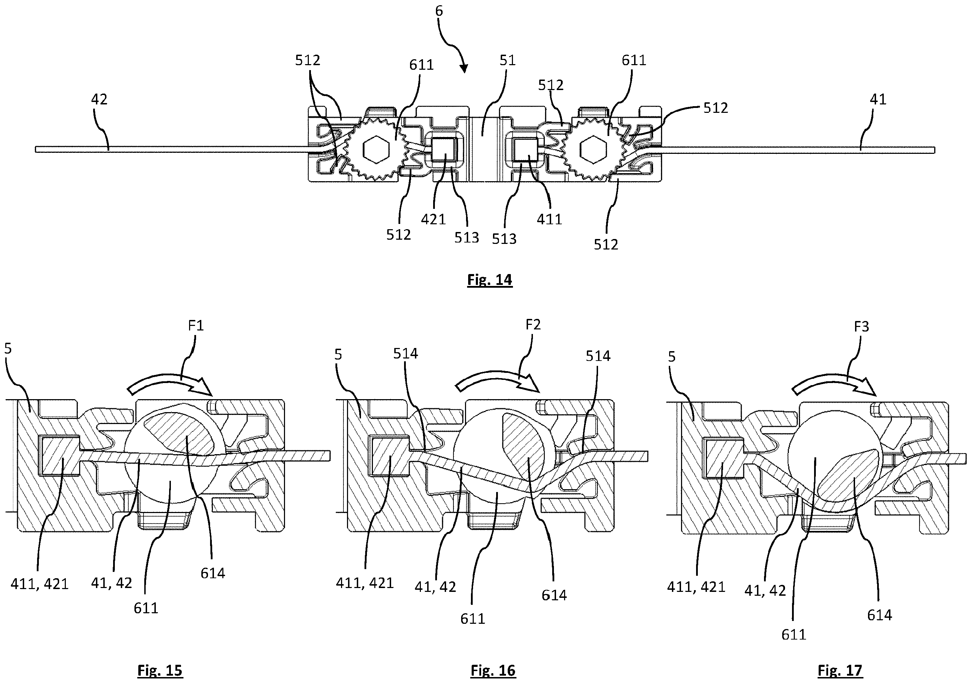

Pour régler la tension du câble de synchronisation 41, 42, il suffit, à l'aide de l'outil compatible, de faire pivoter le tendeur 610 conformément aux flèches F1 à F3 des figures 14 à 17.

Cette rotation du tendeur 610 permet de dévier/allonger le parcours du câble de synchronisation 41, 42. Plus précisément, c'est la protubérance 614 qui permet d'allonger le trajet du câble. En d'autres termes, la protubérance 614 permet de régler la longueur de la portion du câble de synchronisation 41, 42 reçue à l'intérieur du curseur 5.

Selon cet exemple, la rotation du tendeur 610 permet également son verrouillage avec le curseur 5. En effet, comme décrit précédemment, cette rotation permet au doigt de verrouillage 613 de verrouiller le tendeur 610 conformément aux figures 18 à 22.

Les dents de blocages 615 du tendeur 610 sont configurées pour coopérer avec les dents de blocages 512 du curseur 5 de sorte à verrouiller la position du tendeur 610 par rapport au curseur 5. La rotation dans le sens inverse du tendeur 610 est donc empêchée par la coopération des dents 512 et 615 de blocages.

La tension du câble de synchronisation 41, 42 est donc fonction de la rotation du tendeur 610. Le réglage de la tension du câble de synchronisation 41, 42 est donc très simple à effectuer. De plus, les différents crans de blocage 615, correspondant chacun à une position distincte de réglage de la tension du câble, permettent d'obtenir un réglage relativement fin de la tension du câble de synchronisation 41, 42.

Ainsi, le curseur 5, monté sur une des navettes 2, 3 permet de fixer une extrémité de chaque câble de synchronisation 41, 42 à la navette. Les curseurs 5 et les tendeurs 610 permettent, après fixation sur les navettes 2, 3, de relier simplement et efficacement les navettes entre elles par les deux câbles de synchronisation 41, 42 et ainsi assurer un déplacement optimal de ces dernières lors de l'ouverture/fermeture du panneau mobile 12.

De cette manière, les détériorations (usure, bruit, changement de couleur), des navettes, des câbles de synchronisation et du cadre 121 du panneau mobile 12 sont évitées.

### Autres aspects et variantes

Les deux modes de réalisation des moyens de contrôle de la tension des câbles de synchronisation décrits ci-dessus présentent des curseurs portant respectivement des moyens de réglage de position du point d'accroche du câble de synchronisation dans le curseur et des moyens de réglage de la longueur de la portion du câble de synchronisation à l'intérieur du curseur.

Dans une variante (non illustrée), les moyens de contrôle 6 de la tension des câbles de synchronisation 41, 42 peuvent se présenter sous la forme d'un ressort de rappel qui permet d'ajuster la tension des câbles de synchronisation. Pour ce faire, l'extrémité du câble de synchronisation est connectée au ressort de rappel, lui-même connecté au curseur 5.

Ainsi, il est possible de contrôler la tension des deux câbles de synchronisation.

On comprend bien évidemment que le curseur pourrait ne coopérer qu'avec un seul tendeur ou ressort, ou bien même avec aucun tendeur ou ressort.

Ces variantes permettent donc d'adapter la technique proposée à toutes les applications souhaitées. Il est donc possible, au choix, de régler la tension d'un seul ou des deux câbles de synchronisation. Il est également possible de régler la tension des câbles de synchronisation à l'une ou aux deux extrémités des câbles. Le dispositif peut donc présenter jusqu'à quatre tendeurs/ressorts de rappel de sorte que toutes les extrémités des câbles sont réglables.

En d'autres termes, la technique proposée permet de régler la tension au niveau :
- de l'extrémité d'un seul câble de synchronisation ;
- des deux extrémités d'un seul câble de synchronisation ;
- des deux extrémités des deux câbles de synchronisation ;
- de l'extrémité supérieure d'un câble et inférieure de l'autre câble ;
- etc.

Les modes de réalisation décrits ci-dessus s'appliquent à une paroi latérale d'un véhicule automobile.

La technique proposée peut s'appliquer de la même façon à d'autres structures présentant une paroi dans laquelle est définie une baie, comme, par exemple, une caravane ou un camping-car.

Notamment, la baie peut être formée dans une paroi latérale du véhicule (par exemple pour les véhicules utilitaires, les monospaces, les breaks...), dans une paroi orientée vers l'arrière du véhicule (par exemple pour les « pick-up »), ou encore dans une portière.

Il peut également s'agir d'une baie de séparation d'un véhicule.

## Revendications

1. Dispositif d'obturation (1) d'une baie ménagée dans une structure, comprenant :
une partie fixe (11), dans laquelle est définie une ouverture, et au moins un panneau mobile (12) coulissant guidé le long de deux rails (114, 115) de guidage montés sur une face dudit panneau fixe (11), entre une position de fermeture, obturant ladite ouverture, dans un premier plan défini par ledit panneau fixe (11), dit plan d'obturation, et au moins une position d'ouverture, dans un second plan, dit plan de coulissement, sensiblement parallèle audit plan d'obturation,
chacun desdits rails (114, 115) de guidage portant au moins une navette (2, 3) guidée en translation dans ledit rail (114, 115), chaque navette (2, 3) comprenant deux pistes de guidage, respectivement deux pions fixes, aptes à coopérer respectivement avec deux pions fixes, respectivement deux pistes de guidage, porté(e)s par un cadre porté par ledit panneau mobile (12),
des moyens d'actionnement (13) agissant sur une desdites navettes (3) pour assurer un déplacement en translation de ces dernières dans lesdits rails de guidage (114, 115), et le passage du panneau mobile (12) de ladite position d'obturation à ladite au moins une position de coulissement, et réciproquement, deux câbles de synchronisation (41 ,42) circulant chacun dans un des bords latéraux dudit cadre et assurant une synchronisation du déplacement desdites navettes (2, 3),
**caractérisé en ce que** chaque navette (2, 3) porte un curseur (5) mobile par rapport à ladite navette (2, 3) et recevant une extrémité de chacun desdits câbles de synchronisation (41, 42), de façon que le déplacement desdites extrémités desdits câbles de synchronisation (41, 42) soit sensiblement parallèle au plan dudit panneau mobile (12) lors du déplacement desdites navettes (2, 3) assurant le passage dudit panneau mobile (12) de ladite position d'obturation à ladite au moins une position de coulissement, et réciproquement.

2. Dispositif d'obturation (1) selon la revendication 1, **caractérisé en ce que** chaque curseur (5) est guidé en coulissement par rapport à la navette (2, 3) correspondante selon un axe sensiblement perpendiculaire à l'axe de déplacement desdits câbles.

3. Dispositif d'obturation (1) selon la revendication 1, **caractérisé en ce que** chaque curseur (5), respectivement chaque navette, comprend une fourchette (51) coopérant avec un pion (23, 33) porté par la navette (2, 3) correspondante, respectivement le curseur (5) correspondant.

4. Dispositif d'obturation (1) selon la revendication 1, **caractérisé en ce qu'**au moins un desdits curseurs (5) comprend des moyens de contrôle de la tension (6) d'au moins un desdits câbles de synchronisation (41, 42).

5. Dispositif d'obturation (1) selon la revendication 4, **caractérisé en ce que** lesdits moyens de contrôle de la tension (6) comprennent un ressort de rappel.

6. Dispositif d'obturation (1) selon la revendication 4, **caractérisé en ce que** lesdits moyens de contrôle de la tension (6) comprennent des moyens de réglage de la position du point d'accrochage d'au moins une extrémité de câble (41, 42) dans ledit curseur (5).

7. Dispositif d'obturation (1) selon la revendication 6, **caractérisé en ce que** lesdits moyens de contrôle de la tension (6) comprennent au moins un tendeur (600) recevant l'extrémité d'un desdits câbles de synchronisation (41, 42) et pénétrant dans un logement de réception (501) formé dans ledit curseur (5), ledit tendeur (600) pouvant prendre au moins deux positions distinctes dans ledit logement de réception (501), de façon à permettre un réglage de la tension du câble (41, 42) correspondant.

8. Dispositif d'obturation (1) selon la revendication 7, **caractérisé en ce que** ledit tendeur (600) présente au moins un cran de blocage (604) apte à coopérer avec ledit logement (501).

9. Dispositif d'obturation (1) selon la revendication 8, **caractérisé en ce que** ledit logement (501) de réception présente au moins deux dents de blocage (502) aptes à coopérer avec le ou lesdits crans de blocage (604) dudit tendeur (600) de sorte que le réglage de la tension dudit câble de synchronisation (41, 42) est fonction de la profondeur d'insertion du tendeur (600) dans ledit logement (501) dudit curseur (5).

10. Dispositif d'obturation (1) selon la revendication 4, **caractérisé en ce que** lesdits moyens de contrôle de la tension comprennent des moyens de réglage de la longueur de la portion d'au moins un desdits câbles (41, 42) à l'intérieur dudit curseur (5).

11. Dispositif d'obturation selon la revendication 10, **caractérisé en ce que** lesdits moyens de réglage comprennent une came (612) imprimant, selon sa position, un décalage variable sur ledit câble (41, 42).

12. Dispositif d'obturation selon la revendication 11, **caractérisé en ce que** ladite came (612) est solidaire d'une roue dentée (611) coopérant avec au moins deux crans de blocage (502) formés dans ledit curseur, et correspondant à au moins deux réglages de tension distincts.

13. Véhicule automobile comprenant au moins un dispositif d'obturation (1) selon l'une des revendications 1 à 12.

## Patentansprüche

1. Vorrichtung zum Verschließen (1) eines in eine Struktur eingelassenen Öffnungsfeldes, umfassend: einen festen Teil (11), in dem eine Öffnung definiert ist, und mindestens eine bewegliche Platte (12), die geführt entlang zweier Führungsschienen (114, 115), die auf einer Seite der festen Platte (11) montiert sind, zwischen einer Schließposition, die das Öffnungsfeld in einer ersten von der festen Platte (11) definierten Ebene, Schließebene genannt, verschließt, und mindestens einer Öffnungsposition in einer zweiten Ebene, Gleitebene genannt, die im Wesentlichen zur Schließebene parallel ist, gleitet,
wobei jede der Führungsschienen (114, 115) mindestens einen in Translation in der Schiene (114, 115) geführten Schieber trägt, wobei jeder Schieber (2, 3) zwei Führungsspuren bzw. zwei feste Stifte umfasst, die geeignet sind, jeweils mit zwei festen Stiften bzw. zwei Führungsschienen zusammenzuwirken, die von einem von der beweglichen Platte (12) getragenen Rahmen getragen werden,
wobei Betätigungsmittel (13) auf einen der Schieber (3) einwirken, um eine Translationsverlagerung dieser letztgenannten in den Führungsschienen (114, 115) und den Übergang der beweglichen Platte (12) von der Schließposition in die mindestens eine Gleitposition und umgekehrt zu gewährleisten, wobei zwei Synchronisierseile (41, 42) jeweils in einem der Seitenränder des Rahmens umlaufen und eine Synchronisierung der Verlagerung der Schieber (2, 3) gewährleisten,
**dadurch gekennzeichnet, dass** jeder Schieber (2, 3) einen in Bezug zum Schieber (2, 3) beweglichen Regler (5) trägt, der ein Ende jedes der Synchronisierseile (41, 42) aufnimmt, so dass die Verlagerung der Enden der Synchronisierseile (41, 42) im Wesentlichen parallel zur Ebene der beweglichen Platte (12) bei der Verlagerung der Schieber (2, 3) ist, wobei der Übergang der beweglichen Platte (12) von der Schließposition in die mindestens eine Gleitposition und umgekehrt gewährleistet wird.

2. Schließvorrichtung (1) nach Anspruch 1, **dadurch gekennzeichnet, dass** jeder Regler (5) gleitend in Bezug zum entsprechenden Schieber (2, 3) entlang einer im Wesentlichen auf die Verlagerungsachse der Seile senkrechten Achse geführt wird.

3. Schließvorrichtung (1) nach Anspruch 1, **dadurch gekennzeichnet, dass** jeder Regler (5) bzw. jeder Schieber eine Gabel (51) umfasst, die mit einem Stift (23, 33) zusammenwirkt, der von dem entsprechenden Schieber (2, 3) bzw. dem entsprechenden Regler (5) getragen wird.

4. Schließvorrichtung (1) nach Anspruch 1, **dadurch gekennzeichnet, dass** mindestens einer der Regler (5) Mittel zur Regelung der Spannung (6) mindestens eines der Synchronisierseile (41, 42) umfasst.

5. Schließvorrichtung (1) nach Anspruch 4, **dadurch gekennzeichnet, dass** die Spannungsregelungsmittel (6) eine Rückstellfeder umfassen.

6. Schließvorrichtung (1) nach Anspruch 4, **dadurch gekennzeichnet, dass** die Spannungsregelungsmittel (6) Mittel zur Einstellung der Position des Befestigungspunktes mindestens eines Seilendes (41, 42) in dem Regler (5) umfassen.

7. Schließvorrichtung (1) nach Anspruch 6, **dadurch gekennzeichnet, dass** die Spannungsregelungsmittel (6) mindestens eine Spannvorrichtung (600) umfassen, die das Ende eines der Synchronisierseile (41, 42) aufnimmt und in eine Aufnahmelagerung (501) eindringt, die in dem Regler (5) ausgebildet ist, wobei die Spannvorrichtung (600) mindestens zwei unterschiedliche Positionen in der Aufnahmelagerung (501) einnehmen kann, um eine Einstellung der Spannung des entsprechenden Seils (41, 42) zu ermöglichen.

8. Schließvorrichtung (1) nach Anspruch 7, **dadurch gekennzeichnet, dass** die Spannvorrichtung (600) mindestens eine Rastkerbe (604) aufweist, die geeignet ist, mit der Lagerung (501) zusammenzuwirken.

9. Schießvorrichtung (1) nach Anspruch 8, **dadurch gekennzeichnet, dass** die Aufnahmelagerung (501) mindestens zwei Feststellzähne (502) aufweist, die geeignet sind, mit der oder den Rastkerben (604) der Spannvorrichtung (600) zusammenzuwirken, so dass die Einstellung der Spannung des Synchronisierseils (41, 42) von der Einsetztiefe der Spannvorrichtung (600) in der Aufnahme (501) des Reglers (5) abhängig ist.

10. Schließvorrichtung (1) nach Anspruch 4, **dadurch gekennzeichnet, dass** die Spannungsregelungsmittel Mittel zur Einstellung der Länge des Abschnitts mindestens eines der Seile (41, 42) in dem Regler (5) umfassen.

11. Schließvorrichtung nach Anspruch 10, **dadurch gekennzeichnet, dass** die Einstellmittel einen Nocken (612) umfassen, der je nach seiner Position einen variablen Versatz auf das Seil (41, 42) druckt.

12. Schließvorrichtung nach Anspruch 11, **dadurch gekennzeichnet, dass** der Nocken (612) mit einem Zahnrad (611) verbunden ist, das mit mindestens zwei Rastkerben (502), die in dem Regler ausgebildet sind, zusammenwirkt und mindestens zwei Spannungseinstellungen entspricht.

13. Kraftfahrzeug, umfassend mindestens eine Schließvorrichtung (1) nach einem der Ansprüche 1 bis 12.

## Claims

1. A device (1) for sealing a bay provided in a structure, comprising:
a fixed part (11), wherein an opening is defined, and at least one sliding movable panel (12) which is guided along two guide rails (114, 115) mounted on one face of said fixed panel (11), between a closed position, sealing said opening, in a first plane defined by said fixed panel (11), called the sealing plane, and at least one open position, in a second plane, called the sliding plane, substantially parallel to said sealing plane, each of said guide rails (114, 115) carrying at least one shuttle (2, 3) guided in translation in said rail (114, 115), each shuttle (2, 3) comprising two guide tracks, respectively two fixed pins, capable of cooperating respectively with two fixed pins, respectively two guide tracks, carried by a frame carried by said movable panel (12),
actuating means (13) acting on one of said shuttles (3) to ensure a translational movement of the latter in said guide rails (114, 115), and the passage of the movable panel (12) from said sealing position to said at least one sliding position, and vice versa, two synchronisation cables (41, 42) each circulating in one of the lateral edges of said frame and ensuring synchronisation of the movement of said shuttles (2, 3),
**characterised in that** each shuttle (2, 3) carries a slider (5) movable relative to said shuttle (2, 3) and receiving one end of each of said synchronisation cables (41, 42), so that the movement of said ends of said synchronisation cables (41, 42) is substantially parallel to the plane of said movable panel (12) during the movement of said shuttles (2, 3) ensuring the passage of said movable panel (12) from said sealing position to said at least one sliding position, and vice versa.

2. The sealing device (1) according to claim 1, **characterised in that** each slider (5) is slidably guided relative to the corresponding shuttle (2, 3) along an axis substantially perpendicular to the axis of movement of said cables.

3. The sealing device (1) according to claim 1, **characterised in that** each slider (5), respectively each shuttle, comprises a fork (51) cooperating with a pin (23, 33) carried by the corresponding shuttle (2, 3), respectively the corresponding slider (5).

4. The sealing device (1) according to claim 1, **characterised in that** at least one of said sliders (5) comprises means for controlling the tension (6) of at least one of said synchronisation cables (41, 42).

5. The sealing device (1) according to claim 4, **characterised in that** said tension control means (6) comprise a return spring.

6. The sealing device (1) according to claim 4, **characterised in that** said tension control means (6) comprise means for adjusting the position of the attachment point of at least one cable (41, 42) end in said slider (5).

7. The sealing device (1) according to claim 6, **characterised in that** said tension control means (6) comprise at least one tensioner (600) receiving the end of one of said synchronisation cables (41, 42) and penetrating into a receiving housing (501) formed in said slider (5), said tensioner (600) being able to take up at least two distinct positions in said receiving housing (501), so as to allow adjustment of the tension of the corresponding cable (41, 42).

8. The sealing device (1) according to claim 7, **characterised in that** said tensioner (600) has at least one locking notch (604) capable of cooperating with said housing (501).

9. The sealing device (1) according to claim 8, **characterised in that** said receiving housing (501) has at least two locking teeth (502) capable of cooperating with said locking notch/notches (604) of said tensioner (600) so that the adjustment of the tension of said synchronisation cable (41, 42) is a function of the depth of insertion of the tensioner (600) into said housing (501) of said slider (5).

10. The sealing device (1) according to claim 4, **characterised in that** said tension control means comprise means for adjusting the length of the portion of at least one of said cables (41, 42) inside said slider (5).

11. The sealing device according to claim 10, **characterised in that** said adjustment means comprise a cam (612) imparting, depending on its position, a variable offset on said cable (41, 42).

12. The sealing device according to claim 11, **characterised in that** said cam (612) is integral with a toothed wheel (611) cooperating with at least two locking notches (502) formed in said slider, and corresponding to at least two distinct tension settings.

13. A motor vehicle comprising at least one sealing device (1) according to one of claims 1 to 12.
